# EUROPEAN PATENT SPECIFICATION

(11) **EP 3 130 260 B1**
(45) Date of publication and mention of the grant of the patent: **30.01.2019**
(21) Application number: 14888893.6
(22) Date of filing: 11.04.2014
(51) Int. Cl.: A47J 19/00, A47J 19/02

(54) **GRINDING-TYPE JUICER**
MAHLENDER ENTSAFTER
EXTRACTEUR DE JUS DU TYPE BROYEUR

(43) Date of publication of application: 15.02.2017
(73) Proprietor: Lee, Wen-Ching, Taichung City 408 (TW)
(72) Inventor: Lee, Wen-Ching, Taichung City 408 (TW)
(74) Representative: Becker Kurig Straus
(86) International application number: PCT/CN2014/000391
(87) International publication number: WO 2015/154207

(56) References cited:
- CN-U- 201 542 387
- CN-U- 201 602 596
- CN-U- 202 567 717
- CN-U- 202 567 717
- CN-Y- 2 754 505
- CN-Y- 200 991 140
- KR-A- 20090 125 374
- KR-B1- 101 011 731
- US-A1- 2006 065 767
- US-B2- 8 316 762

## Description

### BACKGROUND OF THE INVENTION

### 1. Technical Field

The present invention relates to juice extractors, and more particularly, to a grinding juice extractor with a two-tier grinding mechanism.

### 2. Description of Related Art

US8316762 discloses a juice extractor characterized in that a first cover encloses first and second blades such that, after being cut by the first blade, foods fall on the second blade spontaneously, so as to effectuate cutting twice. Although the juice extractor is effective in crushing foods by cutting the foods twice, the foods are likely to rebound between the second blade and the first cover, and thus the foods are not cut, let alone be crushed. It is because the distance between the second blade and the inner wall of the first cover is longer than the distance between the first blade and the inner wall of the first cover.

Furthermore, the juice extractor further has a second cover and a third blade. Not only is the space between the first cover and the second cover large, but the juice extractor also lacks any structure for guiding the crushed foods. Therefore, the foods are unlikely to pass through the crushing channel between the second cover and the third blade spontaneously, and in consequence the foods are not crushed.

### BRIEF SUMMARY OF THE INVENTION

In view of the aforesaid drawbacks of the prior art, the present invention provides a grinding juice extractor for crushing foods.

The grinding juice extractor of the present invention comprises a filtering device, a cutting disk device, a top mask, a middle base, and a power device. The filtering device comprises a fastening ring, a first grinding ring, a first filter gauze set, a second filter gauze set, and a connection mask. The fastening ring has a supporting ring element, a top connecting element, and a bottom connecting element. The supporting ring element has a top surface and a bottom surface. The top connecting element is formed by extending the outer edge of the supporting ring element upward and disposed on the top surface of the supporting ring element. The bottom connecting element is formed by extending the inner edge of the supporting ring element downward and disposed on the bottom surface of the supporting ring element. The first grinding ring is fixedly connected to the supporting ring element and disposed on the top surface of the supporting ring element. The second filter gauze set is fixedly connected to the top connecting element of the fastening ring. The first filter gauze set has at least one gauze and a tray. The gauze has a top edge and a bottom edge. The tray has a top surface and a bottom surface. The top edge of the gauze of the first filter gauze set is connected to the bottom connecting element of the fastening ring. The bottom edge of the gauzes of the first filter gauze set is fixedly connected to the tray of the first filter gauze set and disposed on the top surface of the tray. The tray has a pivotal connection hole which penetrates the top and bottom surfaces of the tray. The connection mask is fixedly connected to the tray and disposed on the bottom surface of the tray. The connection mask has a penetrating-hole which is in communication with the pivotal connection hole. The cutting disk device is disposed in the filtering device and disposed on the top surface of the tray of the first filter gauze set. The cutting disk device has a shaft. The shaft passes through the pivotal connection hole of the tray and the penetrating-hole of the connection mask. The top mask covers the filtering device and has a second grinding ring and a guiding sloping surface. The second grinding ring faces the first grinding ring of the filtering device and is spaced apart therefrom. The guiding sloping surface faces the gauzes of the first filter gauze set of the filtering device and is spaced apart therefrom. The middle base has a receiving space. The receiving space receives the filtering device. The power device penetrates the middle base, connects to the shaft of the cutting disk device, and thus fixedly connects to the filtering device and the cutting disk device. The power device drives the filtering device and the cutting disk device to rotate.

Therefore, the grinding juice extractor of the present invention is advantageously characterized in that foods crushed with the cutting disk device are spontaneously guided to the gap between the first and second grinding rings for crushing again such that the foods are crushed efficiently.

The structure, features, assembly, and operation of the grinding juice extractor of the present invention are illustrated with embodiments and described below. However, persons skilled in the art understand that the embodiments and description of the present invention are illustrative rather than restrictive of the claims of the present invention.

### BRIEF DESCRIPTION OF THE SEVERAL VIEWS OF THE DRAWINGS

FIG. 1 is a schematic view of a grinding juice extractor according to a preferred embodiment of the present invention;
FIG. 2 is a top view of the grinding juice extractor shown in FIG. 1;
FIG. 3 is a cross-sectional view of the grinding juice extractor taken along line 3-3 of FIG. 2;
FIG. 4 is an exploded view of the grinding juice extractor shown in FIG 1;
FIG. 5 is an exploded view of a filtering device shown in FIG. 4;
FIG. 6 is a cross-sectional view of the fastening ring taken along line 6-6 of FIG. 5;
FIG. 7 is a schematic view of a cutting disk device disposed in the filtering device shown in FIG 2;
FIG. 8 is a cross-sectional view of the cutting disk device disposed in the filtering device taken along line 8-8 of FIG. 7; and
FIG. 9 is a schematic view of the operation of the grinding juice extractor.

### DETAILED DESCRIPTION OF THE EMBODIMENT OF THE INVENTION

The constituent elements of a grinding juice extractor of the present invention and achievable advantages thereof are hereunder illustrated with preferred embodiment in conjunction with drawings. However, the constituent elements, dimensions, and appearance of the grinding juice extractor shown in the drawings are illustrative rather than restrictive of the present invention.

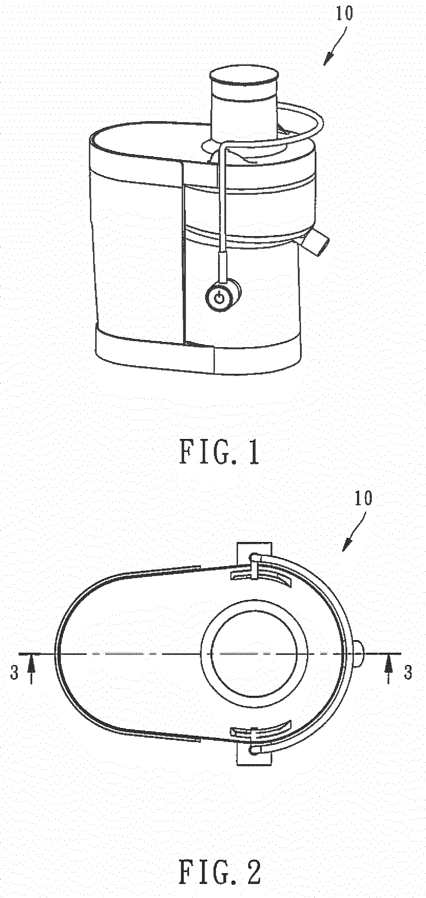

Referring to FIG. 1 and FIG 2, a grinding juice extractor 10 of the present invention extracts juice from vegetables and fruits and grinds nuts. The vegetables, fruits, and nuts are hereunder referred to as foods.

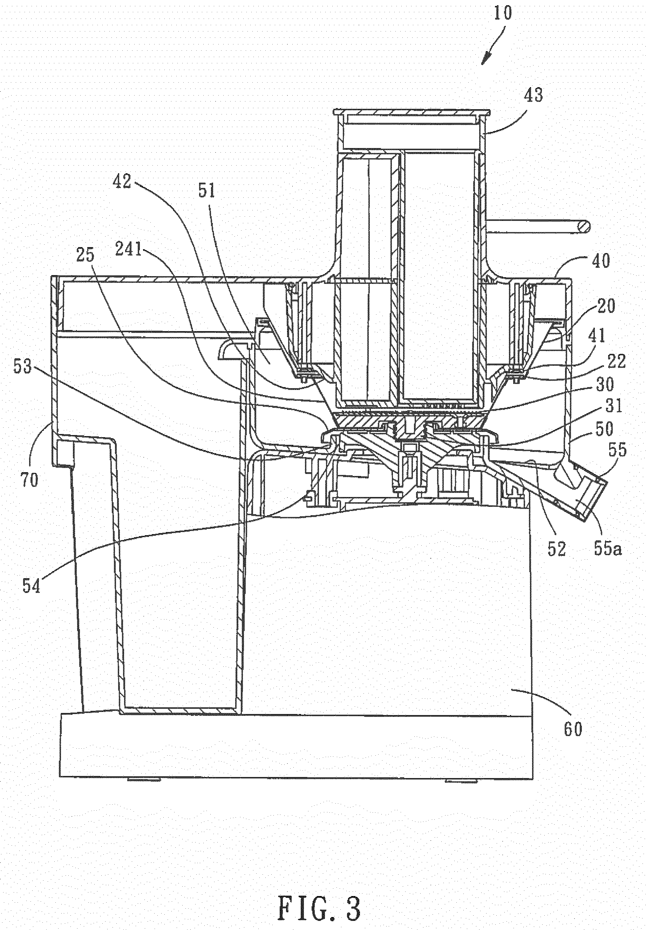

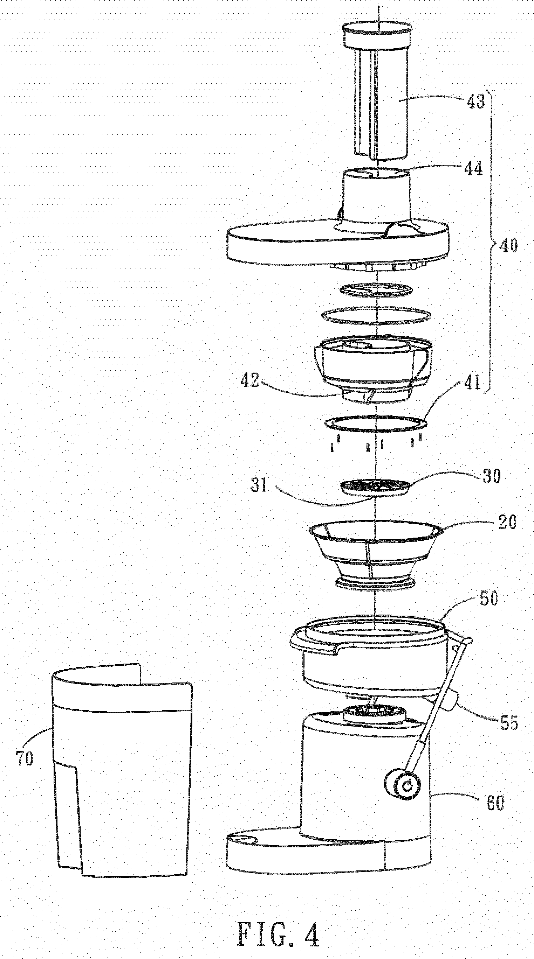

Referring to FIG. 3 and FIG. 4, the grinding juice extractor 10 of the present invention comprises a filtering device 20, a cutting disk device 30, a top mask 40, a middle base 50, and a power device 60. The power device 60 is depicted by partial cross-sectional views. The grinding juice extractor 10 of the present invention further comprises a pulp container 70. The pulp container 70 is not regarded as an essential technical feature of the present invention but is disclosed in the prior art; hence, the pulp container 70 is not described in detail hereunder for the sake of brevity.

The cutting disk device 30 is disposed in the filtering device 20. The cutting disk device 30 has a shaft 31. The shaft 31 penetrates the filtering device 20.

The filtering device 20 has a fastening ring 21, a first grinding ring 22, a second filter gauze set 23, a first filter gauze set 24, and a connection mask 25 which are described in detail later. The top mask 40 covers the filtering device 20 and has a second grinding ring 41 and a guiding sloping surface 42. The second grinding ring 41 faces the first grinding ring 22 of the filtering device 20 and is spaced apart therefrom. The guiding sloping surface 42 faces gauzes 241 (wherein the gauzes 241 are described in detail later) of the first filter gauze set 24 of the filtering device 20 and is spaced apart therefrom. The top mask 40 comprises a pressing rod 43 and a foods channel 44. Foods are put in the foods channel 44 and then squeezed with the pressing rod 43 inserted into the foods channel 44.

The middle base 50 has a receiving space 51. The receiving space 51 receives the filtering device 20. The receiving space 51 of the middle base 50 is inwardly defined by a sloping surface 52. An annular wall 53 is formed by extending the sloping surface upward. The annular wall 53 is disposed in the connection mask 25 of the filtering device 20 to form a through-hole 54. The middle base 50 further has an external tube 55. The external tube 55 has a channel 55a which is in communication with the receiving space 51 of the middle base 50 and is located at the lowest point of the sloping surface 52 of the middle base 50.

The power device 60 passes through the through-hole 54 of the middle base 50 and connects to the shaft 31 of the cutting disk device 30 so as to fixedly connect to the filtering device 20 and the cutting disk device 30, such that the filtering device 20 is clamped between the power device 60 and the cutting disk device 30. The power device 60 drives the filtering device 20 and the cutting disk device 30 to rotate.

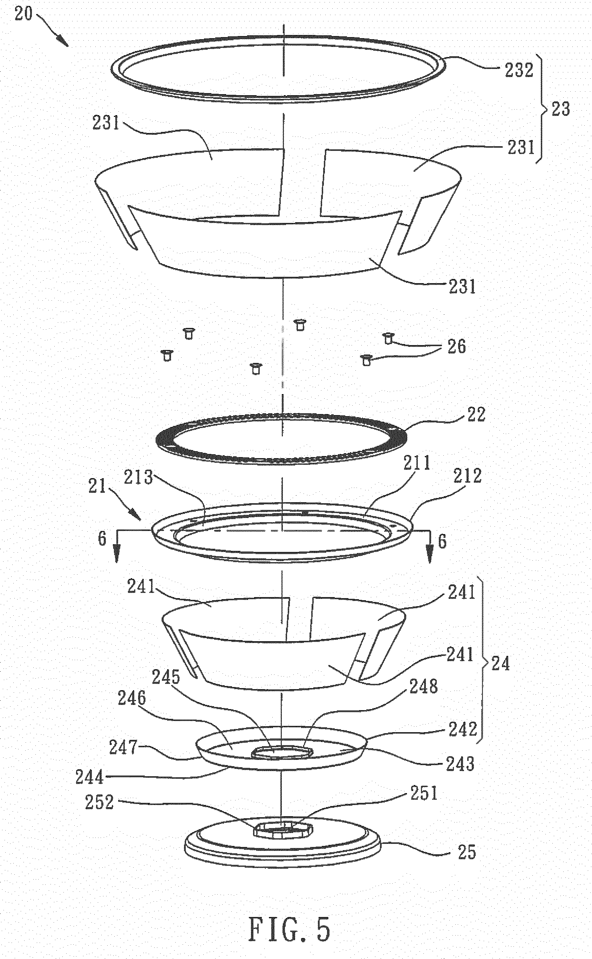

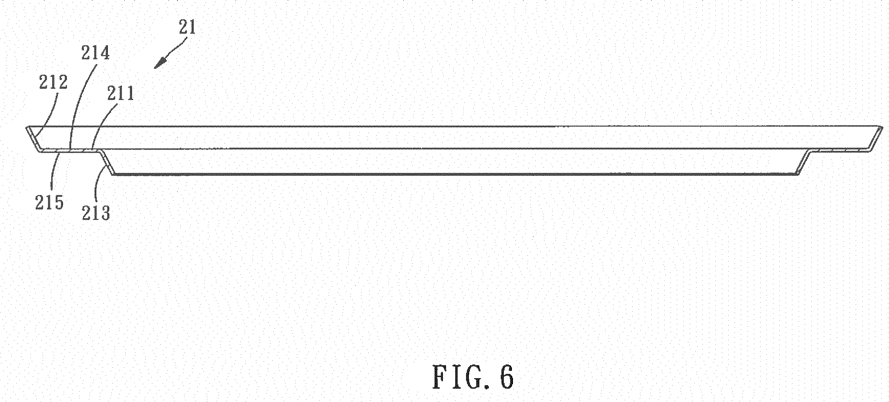

Referring to FIG. 5 and FIG. 6, the constituent elements of the filtering device 20 are described above, whereas the connection and structure of the filtering device 20 are described are described below. The fastening ring 21 has a supporting ring element 211, a top connecting element 212, and a bottom connecting element 213. The supporting ring element 211 has a top surface 214 and a bottom surface 215. The top connecting element 212 is formed by extending the outer edge of the supporting ring element 211 upward and disposed on the top surface 214 of the supporting ring element 211. The bottom connecting element 213 is formed by extending the inner edge of the supporting ring element 211 downward and disposed on the bottom surface 215 of the supporting ring element 211. The first grinding ring 22 is fixedly connected to the supporting ring element 211 and disposed on the top surface 214 of the supporting ring element 211. The second filter gauze set 23 is fixedly connected to the top connecting element 212 of the fastening ring 21. The second filter gauze set 23 comprises three gauzes 231 and a top ring 232. The three gauzes 231 are connected to each other annularly. In practice, it is practicable for the three gauzes 231 to be replaced with an annular gauze; hence, the gauzes 231 are not necessarily in the number of three. The top ring 232 is connected to the top edge of the three gauzes 231, such that the three gauzes 231 are fixed in place. The first filter gauze set 24 has three gauzes 241 and a tray 242. The limitation, constituent elements, and quantity of the gauzes 241 of the first filter gauze set 24 are identical to that of the second filter gauze set 23 and thus are not described hereunder for the sake of brevity. The top edge of the gauzes 241 of the first filter gauze set 24 is fixedly connected to the bottom connecting element 213 of the fastening ring 21. The bottom edge of the gauzes 241 of the first filter gauze set 24 is fixedly connected to the tray 242 of the first filter gauze set 24 and disposed on the top surface 243 of the tray 242. The tray 242 has a pivotal connection hole 245 which penetrates the top and bottom surfaces 243, 244 of the tray 242. The connection mask 25 is fixedly connected to the tray 242 and disposed on the bottom surface 244 of the tray 242. The connection mask 25 has a penetrating-hole 251 in communication with the pivotal connection hole 245.

The filtering device 20 further has a plurality of rivets 26. The rivets 26 each rivet the supporting ring element 211 of the fastening ring 21 and the first grinding ring 22 together, such that the first grinding ring 22 is fixed to the fastening ring 21.

The tray 242 of the first filter gauze set 24 has a bottom wall 246, an outer annular wall 247, and an inner annular wall 248. The top and bottom surfaces 243, 244 of the tray 242 are top and bottom surfaces of the bottom wall 246, respectively. The outer annular wall 247 and the inner annular wall 248 are formed by extending the bottom wall 246 upward and are opposite. The inner annular wall 248 is annular and thus encircles the pivotal connection hole 245. The connection mask 25 has a positioning annular wall 252.

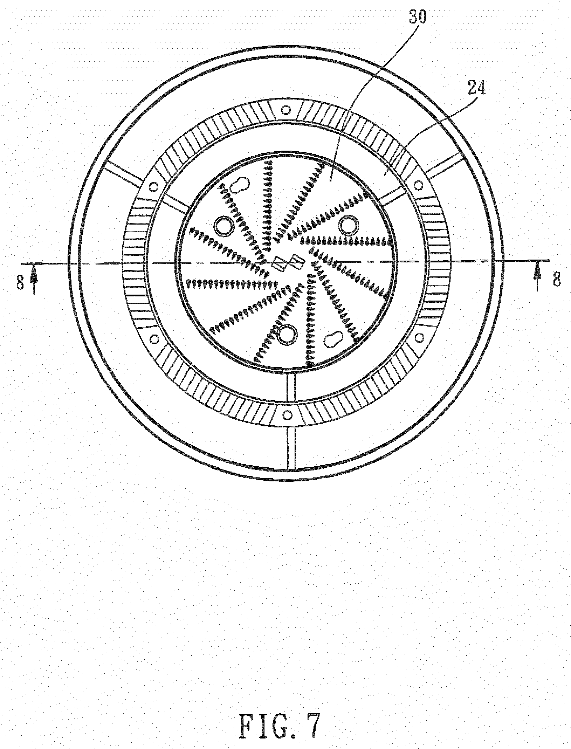

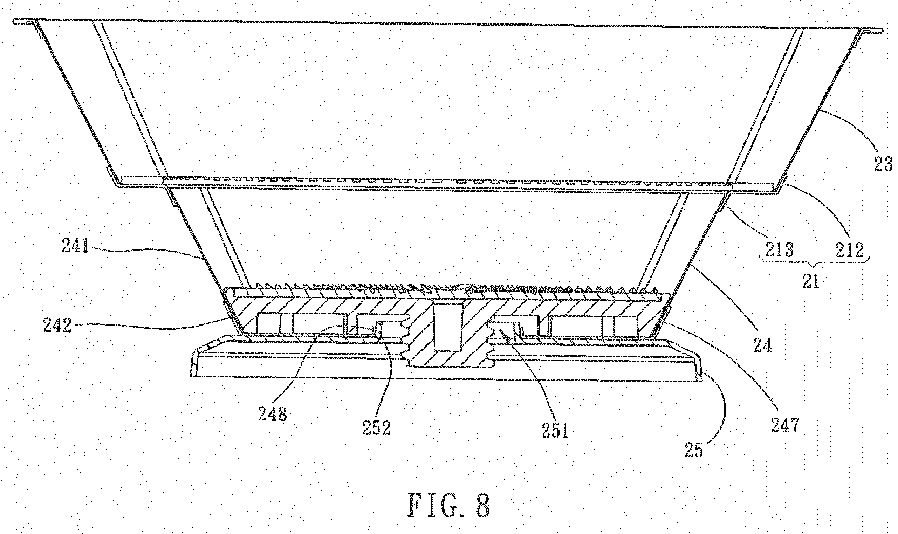

Referring to FIG. 7 and FIG. 8, the cutting disk device 30 is disposed on the top surface 243 of the tray 242 of the first filter gauze set 24, whereas the shaft 31 of the cutting disk device 30 passes through the pivotal connection hole 245 of the tray 242 and the penetrating-hole 251 of the connection mask 25. The bottom edge of the second filter gauze set 23 is in contact with the top connecting element 212 of the fastening ring 21. The top edge of the gauzes 241 of the first filter gauze set 24 is in contact with the bottom connecting element 213 of the fastening ring 21. Hence, the second filter gauze set 23 and the first filter gauze set 24 are firmly fixed to the fastening ring 21.

The outer annular wall 247 of the tray 242 of the first filter gauze set 24 is in contact with the bottom edge of the gauzes 241 of the first filter gauze set 24. That is to say, the bottom edge of the gauzes 241 is in contact with the outer annular wall 247. The positioning annular wall 252 of the connection mask 25 is disposed in the pivotal connection hole 245 of the tray 242 and fixedly connected to the inner annular wall 248 of the tray 242. As the inner annular wall 248 and the positioning annular wall 252 are connected, the pivotal connection hole 245 of the tray 242 is not shown in the diagrams.

The constituent elements and structure of the grinding juice extractor 10 of the present invention are described above. The operation of the grinding juice extractor 10 of the present invention is described below.

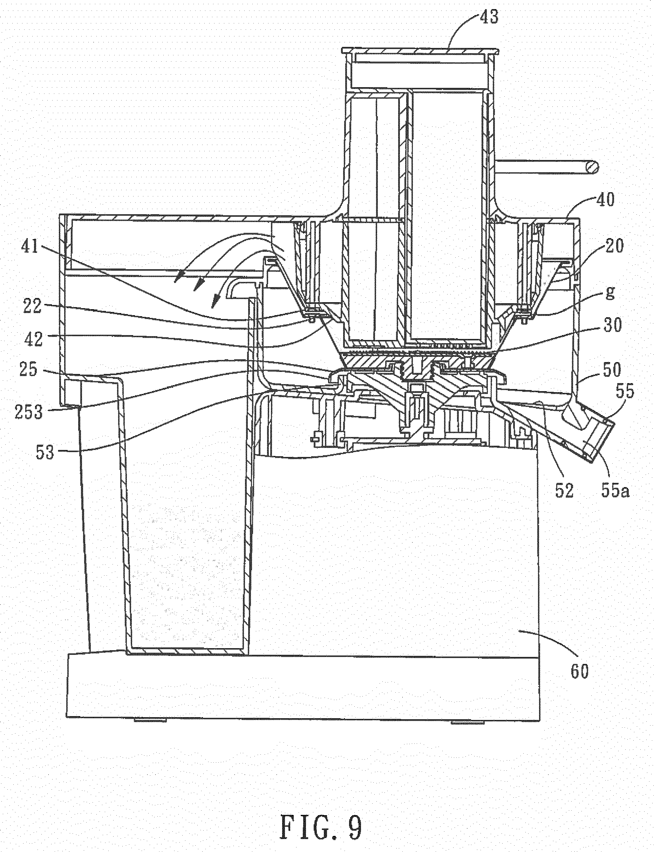

Referring to FIG. 9, after feeding the foods through the top mask 40, a user squeezes the foods with the pressing rod 43 and then starts the power supply to the power device 60 of the grinding juice extractor 10, thereby driving the filtering device 20 and the cutting disk device 30 to rotate. As a result, the foods are ground between the bottom end of the pressing rod 43 and the cutting disk device 30 until the foods are preliminarily crushed. The foods preliminarily crushed are swirled and tossed within the filtering device 20, such that the foods are guided by the guiding sloping surface 42 of the top mask 40 in passing through a gap between the first grinding ring 22 of the filtering device 20 and the second grinding ring 41 of the top mask 40 to undergo second grinding. In doing so, the grinding juice extractor 10 of the present invention crushes the preliminarily-crushed foods once again, such that the pulp left behind by the second instance of crushing performed with the grinding juice extractor 10 of the present invention is finer than that produced with a conventional grinding juice extractor.

Furthermore, the first grinding ring 22 of the filtering device 20 is separated from the second grinding ring 41 of the top mask 40 by a gap g, such that the first grinding ring 22 cannot come into contact with the second grinding ring 41. Hence, it is impossible that during the grinding process the first and second grinding rings 22, 41 rub each other and produce scraps not derived from the foods.

Juice produced during the grinding process is delivered from the gauzes 231, 241 of the second filter gauze set 23 and the first filter gauze set 24 of the filtering device 20 to the receiving space 51 of the middle base 50, and then the juice is guided by the sloping surface 52 to the channel 55a of the external tube 55.

The annular wall 53 of the middle base 50 is disposed in the connection mask 25 of the filtering device 20. The connection mask 25 of the filtering device 20 has an eave portion 253. The eaves portion 253 faces the annular wall 53 of the middle base 50 and is spaced apart therefrom. Therefore, the juice leaving the filtering device 20 never ends up in the power device 60 to damage the power device 60.

In conclusion, a grinding juice extractor of the present invention grinds foods twice and crushes the food thoroughly because the grinding juice extractor is equipped with a top mask and a filtering device with special structure and design.

The constituent elements of present invention, as disclosed in the aforesaid embodiments, are illustrative rather than restrictive of the scope of the present invention. Hence, replacements or changes made to the aforesaid embodiments by any other equivalent elements must fall within the scope of the present invention.

## Claims

1. A grinding juice extractor (10), comprising a filtering device (20) including a fastening ring (21), a first grinding ring (22), a first filter gauze set (24), a second filter gauze set (23), and a connection mask, the fastening ring (21) having a supporting ring element (211), a top connecting element (212) and a bottom connecting element (213), the supporting ring element (211) having a top surface (214) and a bottom surface (215), the top connecting element (212) being formed by extending an outer edge of the supporting ring element (211) upward and disposed on the top surface (214) of the supporting ring element (211), the bottom connecting element (213) being formed by extending an inner edge of the supporting ring element (211)downward and disposed on the bottom surface (215) of the supporting ring element (211), the first grinding ring (22) being fixedly connected to the supporting ring element (211) and disposed on the top surface (214) of the supporting ring element (211), the second filter gauze set (23) being fixedly connected to the top connecting element (212) of the fastening ring (21), the first filter gauze set (24) having at least one gauze (241) and a tray (242), the gauze (241) having a top edge and a bottom edge, the tray (242) having a top surface and a bottom surface, the top edge of the gauze (241) fixedly connected to the bottom connecting element (213) of the fastening ring (21) and the bottom edge of the gauze (241) fixedly connected to the tray (242) of the first filter gauze set (24) and disposed on the top surface of the tray (242), the tray (242) having a pivotal connection hole penetrating the top and bottom surfaces of the tray (242), the connection mask fixedly connecting to the tray (242), and disposed on the bottom surface of the tray (242), and having a penetrating-hole in communication with the pivotal connection hole; a cutting disk device (30) disposed in the filtering device (20) and disposed on the top surface of the tray (242) of the first filter gauze set (24) and having a shaft (31), the shaft (31) passing through the pivotal connection hole of the tray (242) and the penetrating-hole of the connection mask; a top mask (40) adapted to cover the filtering device (20) and having a second grinding ring (41) and a guiding sloping surface (42), the second grinding ring (41) faces the first grinding ring (22) of the filtering device (20) and is spaced apart therefrom, the guiding sloping surface (42) faces the gauze (241) of the first filter gauze set (24) of the filtering device (20) and is spaced apart therefrom; a middle base (50) having a receiving space for receiving the filtering device (20); and a power device (60) passing through the middle base (50), and connecting to the shaft (31) of the cutting disk device (30) to fixedly connecting to the filtering device (20) and the cutting disk device (30), the power device (60) driving the filtering device (20) and the cutting disk device (30) to rotate.

2. The grinding juice extractor (10) of claim 1, wherein a bottom edge of the second filter gauze set (23) is in contact with the top connecting element (212) of the fastening ring (21), the top edge of the gauze(241) of the first filter gauze set (24) is in contact with the bottom connecting element (213) of the fastening ring(21).

3. The grinding juice extractor (10) of claim 2, wherein the filtering device (20) further has a plurality of rivets for riveting the supporting ring element (211) of the fastening ring (21) and the first grinding ring (22) together.

4. The grinding juice extractor (10) of claim 1, wherein the tray (242) of the first filter gauze set (24) has a bottom wall, an outer annular wall, and an inner annular wall, the outer annular wall and the inner annular wall are formed by extending the bottom wall upward and are opposite, the outer annular wall being in contact with the bottom edge of the gauze (241) of the first filter gauze set (24), the inner annular wall is encircled the penetrating-hole, the connection mask having a positioning annular wall disposed in the penetrating-hole of the tray (242) and connected to the inner annular wall of the tray (242).

5. The grinding juice extractor (10) of claim 1, wherein the middle base (50) has a sloping surface and a annular wall, the sloping surface and the annular wall of the middle base (50) are disposed in the receiving space of the middle base (50), the annular wall is formed by extending the sloping upward, and disposed in the connection mask of the filtering device (20) to form a through-hole penetrated by the power device (60).

6. The grinding juice extractor (10) of claim 5, wherein the middle base (50) further has an external tube with a channel in communication with the receiving space and located at a lowest point of the sloping surface of the middle base (50).

7. The grinding juice extractor (10) of claim 5, wherein the connection mask of the filtering device (20) has an eave portion facing the annular wall of the middle base (50) and being spaced apart therefrom.

## Patentansprüche

1. Saft-Reibepresse(10), welche umfasst:
eine Filtereinrichtung (20), mit einem Befestigungsring (21), einem ersten Reibring (22), einem ersten Filtersiebset (24), einem zweiten Filtersiebset (23), und einer Verbindungsmaske, worin der Befestigungsring (21) ein Stützringelement (211), ein oberes Verbindungselement (212) und ein unteres Verbindungselement (213) aufweist, worin das Stützringelement (211) eine obere Oberfläche (214) und eine untere Oberfläche (215) aufweist, worin das obere Verbindungselement (212) durch aufwärtiges Erweitern eines äußeren Randes des Stützringelementes (211) ausgebildet und an der oberen Oberfläche (214) des Stützringelementes (211) angeordnet ist, worin das untere Verbindungselement (213) durch abwärtiges Erweitern eines inneren Randes des Stützringelementes (211) ausgebildet und an der unteren Oberfläche (215) des Stützringelementes (211) angeordnet ist, worin der erste Reibring (22) mit dem Stützringelement (211) fest verbunden und an der oberen Oberfläche (214) des Stützringelementes (211) angeordnet ist, worin das zweite Filtersiebset (23) mit dem oberen Verbindungselement (212) des Befestigungsringes (21) fest verbunden ist, worin das erste Filtersiebset (24) mindestens ein Sieb (241) und eine Schale (242) aufweist, worin das Sieb (241) einen oberen Rand und einen unteren Rand hat, worin die Schale (242) eine obere Oberfläche und eine untere Oberfläche aufweist, worin der obere Rand des Siebes (241) mit dem unteren Verbindungselement (213) des Befestigungsringes (21) fest verbunden ist und worin der untere Rand des Siebes (241) mit der Schale (242) des ersten Filtersiebsets (24) fest verbunden und an der oberen Oberfläche der Schale (242) angeordnet ist, worin die Schale (242) ein zentrales die obere und untere Oberfläche der Schale (242) durchdringendes Verbindungsloch aufweist, worin die Verbindungsmaske mit der Schale (242) fest verbunden und an der unteren Oberfläche der Schale (242) angeordnet ist und ein mit dem zentralen Verbindungsloch in Verbindung stehendes Durchgangsloch aufweist;
eine Schneidescheibeneinrichtung (30), welche in der Filtereinrichtung (20) und auf der oberen Oberfläche der Schale (242) des ersten Filtersiebsets (24) angeordnet ist und eine Welle (31) aufweist, worin die Welle (31) durch das zentrale Verbindungsloch der Schale (242) und das Durchgangsloch der Verbindungsmaske hindurch geht;
eine obere Maske (40), die zum Abdecken der Filtereinrichtung (20) angepasst ist und einen zweiten Reibering (41) und ein schräge Führungs-Oberfläche (42) aufweist, worin der zweite Reibring (41) dem ersten Reibring (22) der Filtereinrichtung (20) zugewandt und davon räumlich getrennt ist, worin die schräge Führungs-Oberfläche (42) dem Sieb (241) des ersten Filtersiebset (24) der Filtereinrichtung (20) zugewandt und davon räumlich getrennt ist;
eine mittlere Basis (50), die einen Aufnahme-Raum zur Aufnahme der Filtereinrichtung (20) aufweist; und
eine Antriebseinrichtung (60), die durch die mittlere Basis (50) geht und die Welle (31) der Schneidescheibeneinrichtung (30) mit der Filtereinrichtung (20) und der Schneidescheibeneinrichtung (30) fest verbindet, worin die Antriebseinrichtung (60) die Filtereinrichtung (20) und die Schneidescheibeneinrichtung (30) zum Drehen antreibt.

2. Saft-Reibepresse(10) nach Anspruch 1, worin ein unterer Rand des zweiten Filtersiebsets (23) mit dem oberen Verbindungselement (212) des Befestigungsringes (21) in Kontakt ist, und worin der obere Rand des Siebes (241) des ersten Filtersiebset (24) mit dem unteren Verbindungselement (213) des Befestigungsringes (21) in Kontakt ist.

3. Saft-Reibepresse(10) nach Anspruch 2, worin die Filtereinrichtung (20) weiter mehrere Nieten aufweist, um das Stützringelement (211) des Befestigungsringes (21) und den ersten Reibring (22) zusammenzunieten.

4. Saft-Reibepresse(10) nach Anspruch 1, worin die Schale (242) des ersten Filtersiebsets (24) eine Bodenwand, eine äußere ringförmige Wand und eine innere ringförmige Wand aufweist, worin die äußere ringförmige Wand und die innere ringförmige Wand durch aufwärtiges Erweitern und abgewandt voneinander ausgebildet sind, worin die äußere ringförmige Wand mit dem Bodenrand des Siebes (241) des ersten Filtersiebsets (24) in Kontakt ist, worin die innere ringförmige Wand das Durchgangsloch umgibt, und worin die Verbindungsmaske eine positionierende ringförmige Wand aufweist, die im Durchgangsloch der Schale (242) angeordnet und mit der inneren ringförmigen Wand der Schale (242) verbunden ist.

5. Saft-Reibepresse(10) nach Anspruch 1, worin die mittlere Basis (50) eine schräge Oberfläche und eine ringförmige Wand aufweist, worin die schräge Oberfläche und die ringförmige Wand der mittleren Basis (50) im Aufnahem-Raum der mittleren Basis (50) angeordnet sind, worin die ringförmige Wand durch aufwärtiges Erweitern der Schräge ausgebildet und in der Verbindungsmaske der Filtereinrichtung (20) angeordnet ist, um ein Durchgangsloch zu bilden, durch das die Antriebseinrichtung geht (60).

6. Saft-Reibepresse(10) nach Anspruch 5, worin die mittlere Basis (50) weiter ein externes Rohr mit einem Kanal aufweist, das mit dem Aufnahme-Raum in Verbindung steht und am niedrigsten Punkt der schrägen Oberfläche der mittleren Basis (50) angeordnet ist.

7. Saft-Reibepresse(10) nach Anspruch 5, worin die Verbindungsmaske der Filtereinrichtung (20) einen der ringförmigen Wand der mittleren Basis (50) zugewandten und davon räumlich getrennten Traufenbereich aufweist.

## Revendications

1. Extracteur de jus du type broyeur (10), comprenant :
un dispositif de filtration (20) comprenant un anneau de fixation (21), un premier anneau broyeur (22), un premier ensemble de toile filtrante (24), un second ensemble de toile filtrante (23), et un cache de liaison, l'anneau de fixation (21) comprenant un élément annulaire d'appui (211), un élément de liaison supérieur (212) et un élément de liaison inférieur (213), l'élément annulaire d'appui (211) ayant une surface supérieure (214) et une surface inférieure (215), l'élément de liaison supérieur (212) étant formé par l'extension d'un bord externe de l'élément annulaire d'appui (211) vers le haut et disposé sur la surface supérieure (214) de l'élément annulaire d'appui (211), l'élément de liaison inférieur (213) étant formé par l'extension d'un bord interne de l'élément annulaire d'appui (211) vers le bas et disposé sur la surface inférieure (215) de l'élément annulaire d'appui (211), le premier anneau broyeur (22) étant relié de manière fixe à l'élément annulaire d'appui (211) et disposé sur la surface supérieure (214) de l'élément annulaire d'appui (211), le second ensemble de toile filtrante (23) étant relié de manière fixe à l'élément de liaison supérieur (212) de l'anneau de fixation (21), le premier ensemble de toile filtrante (24) comprenant au moins une toile (241) et un support (242), la toile (241) ayant un bord supérieur et un bord inférieur, le support (242) ayant une surface supérieure et une surface inférieure, le bord supérieur de la toile (241) étant relié de manière fixe à l'élément de liaison inférieur (213) de l'anneau de fixation (21) et le bord inférieur de la toile (241) étant relié de manière fixe au support (242) du premier ensemble de toile filtrante (24) et disposé sur la surface supérieure du support (242), le support (242) ayant un trou de liaison pivotante traversant les surfaces supérieure et inférieure du support (242), le cache de liaison étant relié de manière fixe au support (242) et disposé sur la surface inférieure du support (242), et ayant un trou traversant en communication avec le trou de liaison pivotante ; un dispositif à disque de découpe (30) disposé dans le dispositif de filtration (20) et disposé sur la surface supérieure du support (242) du premier ensemble de toile filtrante (24) et comprenant un arbre (31), l'arbre (31) traversant le trou de liaison pivotante du support (242) et le trou traversant du cache de liaison ; un cache supérieur (40) conçu pour couvrir le dispositif de filtration (20) et ayant un second anneau broyeur (41) et une surface de guidage inclinée (42), le second anneau broyeur (41) faisant face au premier anneau broyeur (22) du dispositif de filtration (20) et étant espacé de celui-ci, la surface de guidage inclinée (42) faisant face à la toile (241) du premier ensemble de toile filtrante (24) du dispositif de filtration (20) et étant espacée de celle-ci ; une base centrale (50) ayant un espace de réception destiné à recevoir le dispositif de filtration (20) ; et un dispositif moteur (60) traversant la base centrale (50) et relié à l'arbre (31) du dispositif à disque de découpe (30) pour être relié de manière fixe au dispositif de filtration (20) et au dispositif à disque de découpe (30), le dispositif moteur (60) entraînant en rotation le dispositif de filtration (20) et le dispositif à disque de découpe (30).

2. Extracteur de jus du type broyeur (10) selon la revendication 1, dans lequel un bord inférieur du second ensemble de toile filtrante (23) est en contact avec l'élément de liaison supérieur (212) de l'anneau de fixation (21) et le bord supérieur de la toile (241) du premier ensemble de toile filtrante (24) est en contact avec l'élément de liaison inférieur (213) de l'anneau de fixation (21).

3. Extracteur de jus du type broyeur (10) selon la revendication 2, dans lequel le dispositif de filtration (20) comprend en outre une pluralité de rivets destinés à riveter l'élément annulaire d'appui (211) de l'anneau de fixation (21) et le premier anneau broyeur (22) ensemble.

4. Extracteur de jus du type broyeur (10) selon la revendication 1, dans lequel le support (242) du premier ensemble de toile filtrante (24) comprend une paroi inférieure, une paroi annulaire externe et une paroi annulaire interne, la paroi annulaire externe et la paroi annulaire interne sont formées par l'extension de la paroi inférieure vers le haut et sont opposées, la paroi annulaire externe étant en contact avec le bord inférieur de la toile (241) du premier ensemble de toile filtrante (24), la paroi annulaire interne encercle le trou traversant, le cache de liaison comprenant une paroi annulaire de positionnement disposée dans le trou traversant du support (242) et reliée à la paroi annulaire interne du support (242).

5. Extracteur de jus du type broyeur (10) selon la revendication 1, dans lequel la base centrale (50) comprend une surface inclinée et une paroi annulaire, la surface inclinée et la paroi annulaire de la base centrale (50) sont disposées dans l'espace de réception de la base centrale (50), la paroi annulaire est formée par l'extension de la surface inclinée vers le haut, et disposée dans le cache de liaison du dispositif de filtration (20) pour former un trou traversant traversé par le dispositif moteur (60).

6. Extracteur de jus du type broyeur (10) selon la revendication 5, dans lequel la base centrale (50) comprend en outre un tube externe ayant un canal en communication avec l'espace de réception et situé à un point le plus bas de la surface inclinée de la base centrale (50).

7. Extracteur de jus du type broyeur (10) selon la revendication 5, dans lequel le cache de liaison du dispositif de filtration (20) comprend une partie en débord faisant face à la paroi annulaire de la base centrale (50) et étant espacée de celle-ci.
